# EUROPÄISCHE PATENTANMELDUNG

(11) **EP 1 337 133 A2**
(43) Veröffentlichungstag der Anmeldung: **20.08.2003**
(21) Anmeldenummer: 03002488.9
(22) Anmeldetag: 05.02.2003
(51) Int. Cl.: H05B 41/285

(54) **Betriebsschaltung für Entladungslampe mit frequenzvariabler Zündung**

(30) Priorität: 13.02.2002 DE 10205896
(71) Anmelder: Patent-Treuhand-Gesellschaft für elektrische Glühlampen mbH, 81543 München (DE)
(72) Erfinder: Busse, Olaf, 80686 München (DE); Orth, Klaus, Dr., 81545 München (DE)

(57) **Zusammenfassung**

Die Erfindung betrifft eine neue Betriebsschaltung für eine Niederdruckgasentladungslampe 1, bei der eine digitale Steuerung 12 so ausgelegt ist, dass sie durch allmähliches Erniedrigen der Arbeitsfrequenz im Zündvorgang Abschaltvorgänge einer Sicherheitsabschalteinrichtung für übergroße Ströme durch eine Lampendrossel 10 auslöst, um danach die Arbeitsfrequenz etwas zu erhöhen. In dieser Weise kann beispielsweise durch wiederholte pulsartige Zündvorgänge bis zu Abschaltvorgängen oder auch durch einen kontinuierlichen Zündvorgang bei einer minimalen Frequenz, bei der kein Abschaltvorgang auftritt, insgesamt eine Zündung erreicht werden. Die Erfindung hat den Vorteil, gegenüber Temperaturschwankungen und Bauteiltoleranzen unempfindlich zu sein und im Übrigen eine vergleichsweise knappe Bemessung der Lampendrossel 10 zu gestatten.

## Beschreibung

### Technisches Gebiet

Die vorliegende Erfindung bezieht sich auf eine Betriebsschaltung für eine Entladungslampe, insbesondere eine Niederdruckentladungslampe.

Solche Betriebsschaltungen weisen regelmäßig Wechselspannungsgeneratoren auf, mit denen eine Wechselspannung mit einer bestimmten Frequenz an Elektroden der Entladungslampe angelegt wird, um die Entladungslampe einerseits zu zünden und andererseits den Betrieb nach der Zündung aufrecht zu erhalten. Die Details solcher Betriebsschaltungen sind seit längerem allgemein bekannt und müssen hier nicht im Einzelnen erläutert werden.

### Stand der Technik

Es ist insbesondere bereits bekannt, die Betriebsschaltungen so auszulegen, daß sie den Zündvorgang mit Hilfe einer Resonanzüberhöhung in einem Schwingkreis durchführen, der mit der Entladungslampe verschaltet ist. Dazu wird die Frequenz zum Zünden auf einen in der Nähe der Resonanz des Schwingkreises liegenden Wert gesetzt (der meistens gegenüber der später anzulegenden Dauerbetriebsfrequenz erhöht ist). Der Schwingkreis erzeugt durch Resonanzeffekte die für die Zündung erforderlichen Spannungsamplituden.

Es ist ferner bereits bekannt, in Betriebsschaltungen für Entladungslampen Sicherheitsabschalteinrichtungen einzubauen, die dazu ausgelegt sind, bei unzulässig hohen

### Darstellung der Erfindung

Ausgehend von dem geschilderten Stand der Technik liegt der Erfindung das Problem zugrunde, eine im Hinblick auf das Zünden der Entladungslampe verbesserte Betriebsschaltung anzugeben.

Erfindungsgemäß ist dazu eine Betriebsschaltung für eine Entladungslampe vorgesehen, die einen Wechselspannungsgenerator aufweist, der zum Zünden und Betreiben der Entladungslampe eine Wechselstromversorgungsleistung mit verschiedenen Frequenzen erzeugen kann, wobei die Betriebsschaltung dazu ausgelegt ist, die Entladungslampe bei einer Frequenz zu zünden, bei welcher eine Resonanzüberhöhung eines mit der Entladungslampe verschalteten Schwingkreises auftritt, und eine Sicherheitsabschalteinrichtung aufweist, die bei einem Schwellenwert im Bereich unzulässig hoher Versorgungsströme des Wechselspannungsgenerators die Versorgungsleistung abschaltet.

Die Erfindung geht im Gegensatz zum Stand der Technik nicht von einer fest vorgegebenen Zündfrequenz aus, sondern verändert die Frequenz von einer anfänglichen, vermutlich zu hoch liegenden Frequenz ausgehend, allmählich zu kleineren Frequenzen, wobei die beschriebene Sicherheitsabschalteinrichtung den Versorgungsstrom des Wechselstromgenerators überwacht. Kommt es während des Absenkens der Frequenz zu einer ausreichenden Anregung des Schwingkreises und zu einem Zünden der Lampe, so sinkt wegen der Änderung der elektrischen Eigenschaften der Entladungslampe die Resonanzfrequenz des Schwingkreises stark ab. Es wird dann normalerweise nicht zu einem unzulässig hohen Versorgungsstrom kommen. Sollte es jedoch im weiteren Betrieb dennoch zu einem zu hohen Versorgungsstrom kommen, so kann erfindungsgemäß durchaus vorgesehen sein, daß die Sicherheitsabschalteinrichtung dann wieder anspricht. Dies hätte dann aber mit dem von der Erfindung betroffenen Zündvorgang als solchem nichts wesentliches zu tun.

Wenn es andererseits während der Frequenzerniedrigung durch eine zu große Annäherung an die Resonanzfrequenz des Schwingkreises zu unzulässig hohen Versorgungsströmen kommen sollte (wobei die Entladungslampe dann noch nicht gezündet hätte), so spricht erfindungsgemäß die Sicherheitsabschalteinrichtung an.

Wesentlich ist, daß die Betriebsschaltung so ausgelegt ist, daß sie nun nicht etwa den Betrieb gänzlich aufgibt, sondern vielmehr einen neuen Zündversuch mit einer gegenüber der Frequenz, bei der die Abschaltung erfolgt ist, (im folgenden Abschaltfrequenz) erhöhten Frequenz startet. Wie dies im einzelnen erfolgt, ist durch die Erfindung im allgemeinen Sinn nicht festgelegt. Verschiedene bevorzugte Varianten werden im folgenden noch geschildert. Wesentlich ist jedoch, daß sich die Betriebsschaltung von der Abschaltfrequenz zunächst wieder entfernt.

Die erfindungsgemäße Betriebsschaltung ist also dazu in der Lage, sich gewissermaßen an die Resonanz des Schwingkreises "heranzutasten", wobei die Sicherheitsabschalteinrichtung Schäden verhindert. Dies hat zur Folge, daß Schwankungen der Resonanzfrequenz nicht zu Zündstörungen führen. Damit kann insbesondere die Empfindlichkeit der Betriebsschaltung auf Störungen und zeitliche oder temperaturabhängige Veränderungen der Kenngrößen verschiedener Schaltungsbestandteile stark verringert werden. Dies erhöht zum einen die Zuverlässigkeit, hat aber auch deutliche wirtschaftliche Vorteile durch die verringerten Anforderungen einer Bauteilselektion.

Konventionelle Niederdruckentladungslampen werden regelmäßig mit einer so genannten Lampendrossel in Serie geschaltet, die wegen der in diesen Lampen auftretenden negativen Werte der Ableitung der Stromspannungskennlinie notwendig ist. Die Erfindung ist aber wohl gemerkt nicht auf solche Entladungslampen eingeschränkt. Sie bietet jedoch bei der Verwendung von Lampendrosseln große Vorteile. Eine Schwierigkeit im Stand der Technik besteht nämlich darin, daß die Lampendrossel bei bestimmten Stromwerten sättigt. Die Sättigung der Lampendrossel kann zu einer Instabilität der Betriebsschaltung führen, die nicht toleriert werden kann. Dies ist der Hauptgrund für die Verwendung von Sicherheitsabschalteinrichtungen bei konventionellen Niederdruckentladungslampen.

Der Sättigungsstrom einer Lampendrossel ist jedoch relativ stark temperaturabhängig, so daß die Lampendrossel mit Rücksicht auf mögliche hohe Temperaturen vorsichtshalber relativ groß ausgelegt werden muß. Denn andererseits müssen mit der Betriebsschaltung zum Zünden der Entladungslampe bei einer konventionellerweise fest vorgegebenen Zündfrequenz relativ große Zündspannungen erzeugt werden können, um auch bei niedrigen Temperaturen ein sicheres Zünden zu gewährleisten. Die großen Zündspannungen sind notwendigerweise mit relativ großen Lampendrosselströmen verbunden. Insgesamt führt dies dazu, daß aus Gründen der Zuverlässigkeit und Sicherheit übergroße Lampendrosseln verbaut werden, die für die meisten Anwendungsfälle gar nicht notwendig wären. Dies hat zum einen Nachteile im Hinblick auf Baugröße und Baugewicht der Betriebsschaltung, zum anderen natürlich auch Kostennachteile.

Wenn erfindungsgemäß jedoch die Funktion der Sicherheitsabschalteinrichtung gewissermaßen in den normalen Zündvorgang integriert wird, können vergleichsweise kleinere Lampendrosseln verbaut werden. Das Auftreten von Sicherheitsabschaltungen im Zündvorgang bildet bei der Erfindung nämlich keinen problematischen Ausnahmefall, der ein Ausbleiben einer erfolgreichen Zündung nach sich zieht, sondern einen in den normalen Funktionsablauf der Betriebsschaltung integrierten Vorgang.

Vorteilhafterweise ist die Betriebsschaltung so ausgelegt, daß sie nach einer einmal erfolgten Abschaltung in Folge eines Ansprechens der Sicherheitsabschalteinrichtung die Versorgungsfrequenz wiederum allmählich erniedrigt. Dabei geht sie von einer gegenüber der Abschaltfrequenz erhöhten Startfrequenz aus. Der Zündvorgang hat dann also einen grundsätzlich iterativen Charakter.

### Dabei gibt es zwei jeweils vorteilhafte bevorzugte Varianten:

Zum einen kann die Betriebsschaltung so ausgelegt sein, daß sie bei dem erneuten Zündversuch die Frequenz nur noch bis zu einer gegenüber der letzten Abschaltfrequenz geringfügig erhöhten Minimalfrequenz erniedrigt. Dabei bleibt die Sicherheitsabschalteinrichtung allerdings aktiv, schaltet also gegebenenfalls wieder ab. Die Minimalfrequenz wird also nicht unbedingt erreicht. Sollte es wieder zu einem Abschalten gekommen sein, so wird der Vorgang wiederholt, also wiederum die Frequenz allmählich erniedrigt, und zwar, wenn kein Abschalten erfolgt, wiederum nur bis zu einer gebenüber der letzten, also zweiten, Abschaltfrequenz geringfügig erhöhten Frequenz.

In dieser Weise tastet sich die Betriebsschaltung also gewissermaßen in kleinen Schritten von einer einmal erkannten Abschaltfrequenz ausgehend zu höheren Frequenzen nach oben, bis eine Minimalfrequenz gefunden ist, bei der keine Sicherheitsabschaltung mehr auftritt. Mit dieser Minimalfrequenz kann dann, wenn die Zündung nicht bereits erfolgt ist, der Zündvorgang fortgesetzt werden. Die Minimalfrequenz liegt durch das vorherige Abtasten der Sicherheitsabschaltung auf einem optimierten, also möglichst niedrigen Niveau und damit möglichst nah an der Resonanz des Schwingkreises. Damit können große Zündspannungen erzeugt werden, ohne letztlich problematische Sättigungen der Lampendrossel zu riskieren. Analoge Vorteile gelten dann, wenn die Sicherheitsabschalteinrichtung aus anderen Gründen als zur Vermeidung von Lampendrosselsättigungen vorgesehen sein sollte.

Die andere bevorzugte Ausgestaltung sieht vor, daß die Minimalfrequenz, bis zu der die Frequenz bei Ausbleiben einer Sicherheitsabschaltung abgesenkt werden kann, von vorneherein bei einem bestimmten Wert bleibt. Wenn es also bei dieser Minimalfrequenz oder bei gegenüber dieser erhöhten Frequenzen bereits zu Sicherheitsabschaltungen kommt, so werden diese Sicherheitsabschaltungen iterativ wiederholt. Da die Sicherheitsabschalteinrichtung so schnell ansprechen soll, daß Schäden vermieden werden, besteht darin kein grundsätzliches Problem. Es kommt also zu einem wiederholten Einprägen von Zündpulsen mit so hohen Amplituden, daß sie durch die Sicherheitsabschalteinrichtung immer wieder abgebrochen werden. Infolge der Wiederholung dieser Zündpulse wird es aber im Normalfall zu einer Zündung der Lampe kommen, weil bereits Vorionisationen in dem Entladungsmedium aufgetreten sind. Dann wird es also bei einer Wiederholung der Zündversuche zu einer Zündung kommen, bei der keine Sicherheitsabschaltung mehr auftritt. Beide Varianten werden in den Ausführungsbeispielen näher dargestellt.

Es ist weiterhin bevorzugt, den Zündvorgang insgesamt zu begrenzen, was erfindungsgemäß durch eine Laufvariable geschehen kann. Diese wird bei dem Zündvorgang hochgezählt, solange keine Zündung erfolgt. Sollte sie einen bestimmten Maximalwert erreichen, bevor die Entladungslampe zündet, so werden die Zündversuche abgebrochen, wobei gegebenenfalls auch eine Fehlermeldung erzeugt werden könnte. Diese Laufvariable kann in unterschiedlicher Weise realisiert sein. Sie könnte beispielsweise mit jedem Abschaltvorgang um einen Wert erhöht werden oder mit den einzelnen Frequenzerniedrigungsschritten verbunden sein, sofern die Frequenzerniedrigung schrittweise erfolgt. Es kann sich auch um eine einfache Zeitvariable handeln.

Der wesentliche Anwendungsfall der Erfindung liegt bei Halbbrückenoszillatoren als Wechselspannungsgeneratoren. Solche Halbbrückenoszillatoren sind als solche bekannt. Sie weisen zwei Schalttransistoren auf, deren Schaltbetrieb geeignet getaktet sein muß. Bei der Erfindung erfolgt dies vorzugsweise durch eine digitale Steuerschaltung, die die Frequenzen vorgibt und daher in der erfindungsgemäßen Weise ausgestaltet sein muß. Insbesondere kann die Betriebsschaltung als digitale Steuerschaltung einen sogenannten Microcontroller mit einem Mikroprozessor aufweisen, wie dies in den Ausführungsbeispielen dargestellt ist.

Der Schwellenwert für das Ansprechen der Sicherheitsabschalteinrichtung kann, wenn diese ausreichend rasch anspricht, relativ hoch liegen. Er kann insbesondere bei Verwendung einer Lampendrossel deutlich über dem nominellen Sättigungsstrom der Lampendrossel bei Raumtemperatur liegen. Damit wird insbesondere wieder eine Unempfindlichkeit gegen Schwankungen von Bauteilparametem oder der Betriebsoder Umgebungstemperatur erreicht. Da eine Sättigung der Lampendrossel ohnehin dazu führt, daß sich der Lampendrosselstrom infolge der Temperaturerhöhung und/oder der durch die Sättigung absinkenden Induktivität weiter erhöht, führt auch eine an sich noch nicht bis zu dem Schwellenwert führende Stromüberhöhung im Regelfall direkt zu anwachsenden Stromstärken, die dann auch in den Bereich eines relativ hoch angesetzten Schwellenwerts gelangen. Sinnvoll sind beispielsweise Schwellenwerte über dem 1,3-fachen, vorzugsweise über dem 1,4-fachen oder über dem 1,5-fachen des nominellen Sättigungsstroms der Lampendrossel bei Raumtemperatur. Bevorzugt ist ferner, daß der Schwellenwert nicht höher als das 2,5-fache, vorzugsweise 2-fache, besonders bevorzugterweise 1,8-fache des nominellen Sättigungsstroms liegt.

Die Frequenz der von der Betriebsschaltung zur Verfügung gestellten Versorgungsleistung wird nach einem erfolgreichen Zünden vorteilhafterweise weiter verändert und zwar so, daß auf einen vorgegebenen Versorgungsstrom geregelt werden kann. Dann ist also die beispielsweise durch den Microcontroller gegebene Variabilität der Betriebsfrequenz auch aus von dem Zündvorgang an sich unabhängigen Gründen von Vorteil.

Insbesondere bei einer digitalen Frequenzerzeugung in einer digitalen Steuerschaltung wird die allmähliche Frequenzerniedrigung notwendigerweise immer schrittweise erfolgen. Um den Ablauf des erfindungsgemäßen Zündens nicht unnötig kompliziert zu gestalten und einen relativ schnellen Ablauf zu gewährleisten, können dabei die Schritte der Frequenzerniedrigung in geeigneter Weise gewählt werden. Diese Frequenzauflösung ist auch deswegen sinnvollerweise nicht zu fein, weil sie mit der internen maximalen Taktfrequenz der digitalen Steuerung zusammenhängt. Die interne Taktfrequenz liegt vorzugsweise zwischen 10 MHz und 20 MHz. Typische Betriebsfrequenzen eines Halbbrückenoszillators liegen etwa zwischen 35 kHz und 105 kHz. Die Frequenzauflösung, d.h. die relative Schrittweite, bei der Frequenzerniedrigung liegt damit also vorzugsweise in einem Bereich von etwa 0,2 - 1 %.

### Kurze Beschreibung der Zeichnungen

Im folgenden wird die Erfindung anhand von Ausführungsbeispielen näher erläutert. Die dabei offenbarten Einzelmerkmale können auch in anderen Kombinationen erfindungswesentlich sein. Außerdem wird ausdrücklich festgestellt, daß die Erfindung sowohl Vorrichtungscharakter als auch Verfahrenscharakter hat und die vorstehende und die folgende Offenbarung mit Rücksicht auf beide Kategorien zur verstehen ist.
- Figur 1: zeigt ein schematisiertes Blockschaltbild einer erfindungsgemäßen Betriebsschaltung;
- Figur 2: zeigt ein Flussdiagramm zur Illustration der Funktion der Betriebsschaltung aus Figur 1 nach einem ersten Ausführungsbeispiel;
- Figur 3: zeigt ein Flussdiagramm zur Illustration der Funktion der Betriebsschaltung aus Figur 1 nach einem zweiten Ausführungsbeispiel;
- Figur 4: zeigt ein schematisiertes Beispiel eines typischen Zeitverlaufs der Zündspannung bei dem ersten Ausführungsbeispiel;
- Figur 5: zeigt ein schematisiertes Beispiel eines typischen Zeitverlaufs der Zündspannung bei dem zweiten Ausführungsbeispiel.

### Bevorzugte Ausführung der Erfindung

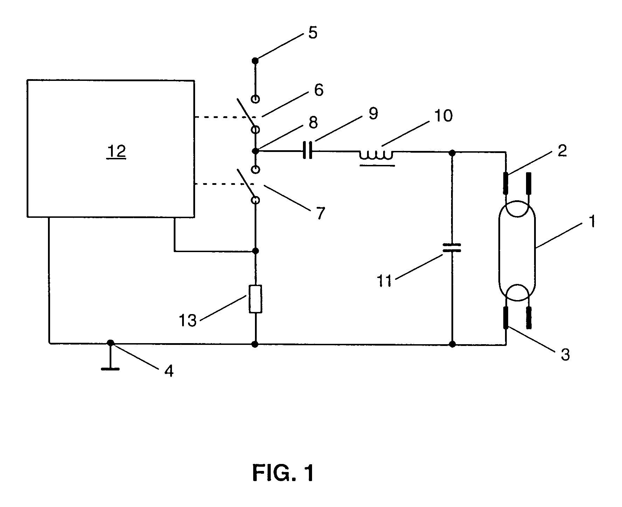

In Figur 1 bezeichnet die Bezugsziffer 1 eine Niederdruckentladungslampe mit zwei vorheizbaren Glühwendelelektroden 2 und 3. Zwischen einem Masseanschluß 4 und einer Zwischenkreisversorgungsspannung 5 liegt eine an sich bekannte Oszillatorhalbbrücke mit zwei Schalttransistoren 6 und 7. Durch einen alternierenden Schaltbetrieb der beiden Schalttransistoren 6 und 7 läßt sich ein Mittenabgriff 8 zwischen der Zwischenkreisversorgungsspannung und dem Massepotential hin- und herschalten. Dadurch kann aus der an dem Anschluß 5 anliegenden gleichgerichteten Zwischenkreisversorgungsspannung, die über einen im übrigen konventionellen Gleichrichter mit einer Glättungsschaltung aus einer Netzspannung gewonnen wird, eine hochfrequente Versorgungsspannung für die Entladungslampe 1 erzeugt werden.

Zwischen dem Masseanschluß 4 und den Mittenabgriff 8 sind in Serie ein sogenannter Koppelkondensator 9, eine Lampendrossel 10 und die Entladungslampe 1 geschaltet. Der Koppelkondensator 9 dient zur Abkopplung der Entladungslampe 1 von Gleichstromanteilen; die Lampendrossel 10 dient insbesondere zur Kompensation der stellenweise negativen Ableitung der Stromspannungskennlinie der Entladungslampe 1. Beide Schaltungsbauteile sind in dieser Funktion allgemein bekannt und müssen hier nicht näher erläutert werden.

Das Gleiche gilt für einen parallel zu der Entladungslampe 1 und ebenfalls in Serie zu dem Koppelkondensator 9 und der Lampendrossel 10 liegenden Resonanzkondensator 11, der zur Erzeugung von resonanzüberhöhten Zündspannungsamplituden zum Zünden der Entladungslampe 1 dient.

Soweit bislang beschrieben, ist die Betriebsschaltung völlig konventionell aufgebaut. Allerdings werden die Steueranschlüsse der Schalttransistoren 6 und 7, wie in Figur 1 gestrichelt angedeutet, durch Steuersignale aus einer digitalen Steuerschaltung 12 gesteuert. Die digitale Steuerschaltung 12 erfaßt ferner über einen Messwiderstand 13 ein die Höhe des Stroms durch die Lampendrossel 10 anzeigendes Signal und weist eine auf diesen Strom ansprechende Sicherheitsabschalteinrichtung auf.

Die digitale Steuerschaltung 12 ist ein speziell angepasster Microcontroller, der einen Mikroprozessor und weitere Hilfsschaltungen enthält. Diese Steuerschaltung 12 wird im folgenden anhand ihrer Funktion näher beschrieben. Dem Fachmann ist klar, daß es sich dabei um eine in an sich bekannter Weise programmierte digitale Schaltung handelt.

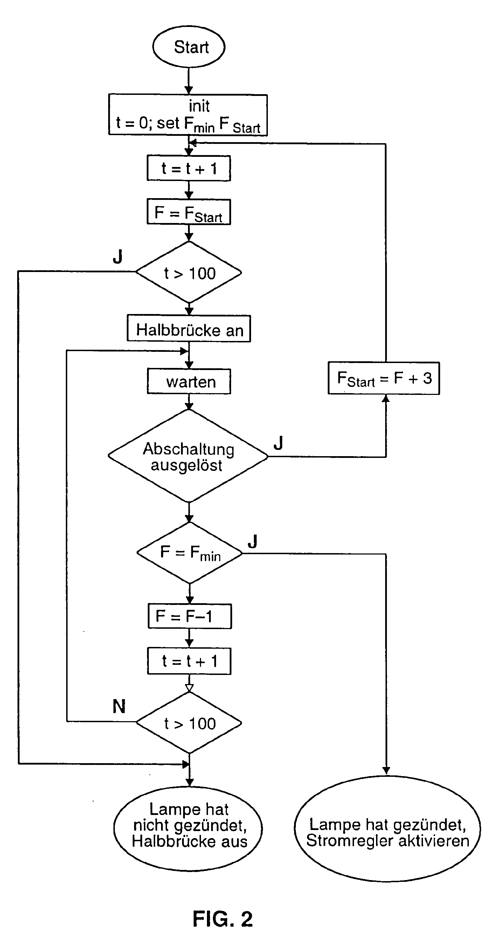

Figur 2 zeigt den Funktionsablauf gemäß einem ersten Ausführungsbeispiel. Bei diesem Ausführungsbeispiel wird gemäß dem oberen Anfang des Flußdiagramms in Figur 2 nach dem Start in einem Initiiervorgang zunächst eine Laufvariable t auf 0 gesetzt und werden geeignete Werte für eine Minimalfrequenz Fₘᵢₙ und eine Maximalfrequenz F_{Start} festgelegt. Dabei ist F_{Start} so groß, daß sie deutlich über der vermuteten geeigneten Frequenz zur Zündung der Entladungslampe 1, also insbesondere über der Resonanzfrequenz des durch den Koppelkondensator 9, die Lampendrossel 10 und den Resonanzkondensator 11 gebildeten Schwingkreises, liegt. Die Minimalfrequenz Fₘᵢₙ ist kleiner als die vermutete Resonanzfrequenz.

In einem weiteren Schritt wird die Laufvariable t um 1 erhöht, beim ersten Durchgang also auf den Wert 1, und die aktuelle Arbeitsfrequenz F der digitalen Steuerung, also die Taktfrequenz der Ansteuerung der Schalttransistoren 6 und 7 und damit die Frequenz der Versorgungsleistung für die Entladungslampe 1, auf den Maximalwert F_{Start} gesetzt.

Eine folgende Abfrage der Laufvariable t ergibt, daß diese kleiner als ein Maximalwert der Laufvariable, hier 101, ist, so daß die digitale Steuerschaltung 12 in einem nächsten Schritt den Halbbrückenoszillator mit den Schalttransistoren 6 und 7 mit der Frequenz F in Betrieb nimmt. Dann wird für einen bestimmte Zeitraum, der über der Ansprechzeit der in der digitalen Steuerschaltung 12 enthaltenen Sicherheitsabschalteinrichtung liegt, abgewartet und danach gefragt, ob die Sicherheitsabschaltung ausgelöst hat oder nicht. Die Sicherheitsabschalteinrichtung spricht typischerweise in einem Bereich einer Schwingung, also beispielsweise innerhalb von 20 µs, an, so daß die Wartezeit im Bereich weniger 10 µs liegen kann. Um verzögerte Ansprechvorgänge (Drosselerwärmung) auch zu berücksichtigen, liegt die Wartezeit hier bei etwa 250 µs. Bei diesem Wert können die notwendigen Berechnungen leicht durchgeführt werden. Ein kürzerer Wert ist wegen der schnellen Reaktion der Sicherheitsabschalteinrichtung nicht unbedingt notwendig.

Wenn die Sicherheitsabschalteinrichtung nicht auslöst, was wegen des geeignet gewählten Werts für F_{Start} zu erwarten ist, so gelangt der Prozessablauf über eine Zwischenabfrage, ob die aktuelle Frequenz der Minimalfrequenz entspricht, was im vorliegenden Fall natürlich verneint wird, zu einem nächsten Schritt, in dem die aktuelle Frequenz um eine Schritteinheit erniedrigt wird. Bei diesem Beispiel wird von einer internen Arbeitsfrequenz der digitalen Steuerschaltung 12 in der Größenordnung von 10 MHz und damit einer Frequenzauflösung von etwa 100 ns ausgegangen. Bei einer typischen Arbeitsfrequenz der Entladungslampe 1 von etwa 50 kHz entspricht das Stufen in der Größenordnung von 0,5 %.

Ferner wird die Laufvariable t um 1 erhöht, jetzt also auf 2. Da t immer noch kleiner als 100 ist, gelangt man von der folgenden Abfrage über den negativen Ausgang wieder nach oben, so daß für die Wartezeit gewartet wird, ob die Sicherheitsabschalteinrichtung ausgelöst hat. Dieser Ablauf wiederholt sich mit schrittweiser Erniedrigung der tatsächlichen Frequenz und Erhöhung der Laufvariable t so lange, bis eine von drei Möglichkeiten auftritt:

Zum Ersten könnte bei einer bestimmte Frequenz F ein Abschaltvorgang vorgekommen sein. Dann wird die entsprechende Abfrage nach rechts durch den Ja-Ausgang verlassen, so daß die neue Maximal- und Startfrequenz Fₛₜₐᵣₜ auf einen Wert von drei Frequenzschritten über dieser Abschaltfrequenz festgelegt wird. Dann wird die Laufvariable t wieder um 1 erhöht und der bereits beschriebene Ablauf von der um drei Schritteinheiten über der Abschaltfrequenz liegenden Startfrequenz ausgehend wiederholt. Der Ablauf tastet sich nunmehr also iterativ an immer wieder neue Abschaltvorgänge heran, wobei er nach einem Abschaltvorgang jeweils drei Frequenzschritteinheiten über der aktuellen Abschaltfrequenz, die sich während dieser iterativen Wiederholungen durchaus ändern kann, neu beginnt.

Zum Zweiten sollte während dieser iterativen Wiederholung eine Lampenzündung erfolgen, die eine sofortige Verringerung der Resonanzfrequenz nach sich zieht. Dies liegt an der deutlichen Erniedrigung der zu dem Resonanzkondensator 11 parallel liegenden Lampenimpedanz. Daher tritt nun kein weiterer Abschaltvorgang auf, weil Resonanzüberhöhungen des Lampendrosselstroms ausbleiben. Deswegen wird in der in Figur 2 etwa in der Mitte angeordneten Abfrage der Auslösung der Abschaltung mit nein entschieden. Darauf folgt die Abfrage, ob die aktuelle Arbeitsfrequenz bei der Minimalfrequenz Fₘᵢₙ liegt. Dies ist bei der geschilderten Situation vermutlich nicht der Fall, so dass die Arbeitsfrequenz weiter abgesenkt wird bis nach entsprechend vielen Zyklen der Wert Fₘᵢₙ erreicht ist. Daraus wird dann durch Bejahung dieser Abfrage geschlossen, dass die Lampe 1 gezündet hat, so dass die digitale Steuerschaltung 12 nunmehr in einen Dauerbetriebsmodus umschaltet. In diesem Dauerbetriebsmodus wird die Frequenz F so verändert, dass sie auf einen konstanten Strom durch die Lampendrossel 10 geregelt wird.

Zum Dritten könnte es aber auch vorkommen, dass es immer wieder zu Abschaltungen kommt, also keine Lampenzündung vorliegt, bis die Laufvariable t den Wert 101 erreicht hat. Dann wird durch den Ja-Ausgang des entsprechenden Abfrageschrittes im oberen Drittel der Figur 2 die Schlussfolgerung gezogen, dass sich die Lampe nicht hat zünden lassen. Damit wird der Halbbrückenoszillator ausgeschaltet und bei Bedarfein Fehlersignal generiert.

Eine weitere Möglichkeit für ein Ausschalten wegen Ausbleibens einer normalen Zündung ergibt sich dann, wenn es innerhalb des Bereichs bis t = 100 nicht zu einem Absinken der Frequenz auf Fₘᵢₙ gekommen ist. Bei diesem Ausführungsbeispiel ist ein Abstand zwischen Fₛₜₐᵣₜ und Fₘᵢₙ von etwa 20 - 30 Frequenzschritten typisch, so dass es bei einem normalen Ablauf vor einem Erreichen der Situation t = 101 zu der Situation F = Fₘᵢₙ gekommen sein sollte. Geschieht dies nicht, also wird t = 101 bei F > Fₘᵢₙ, liegt ebenfalls eine Störung vor, so dass die Entladungslampe 1 sicherheitshalber nicht weiterbetrieben wird. Der Maximalwert für t muss also mit Rücksicht auf den Abstand zwischen Fₘᵢₙ und Fₛₜₐᵣₜ ausreichend groß gewählt werden.

Typische Zahlenwerte können bei einigen 100 Abschaltvorgängen über einen Zeitraum von insgesamt etwa bis zu 100 - 200 ms liegen. Es bleibt also genügend Zeit für die bereits angesprochene Wartezeit auf den Abschaltvorgang.

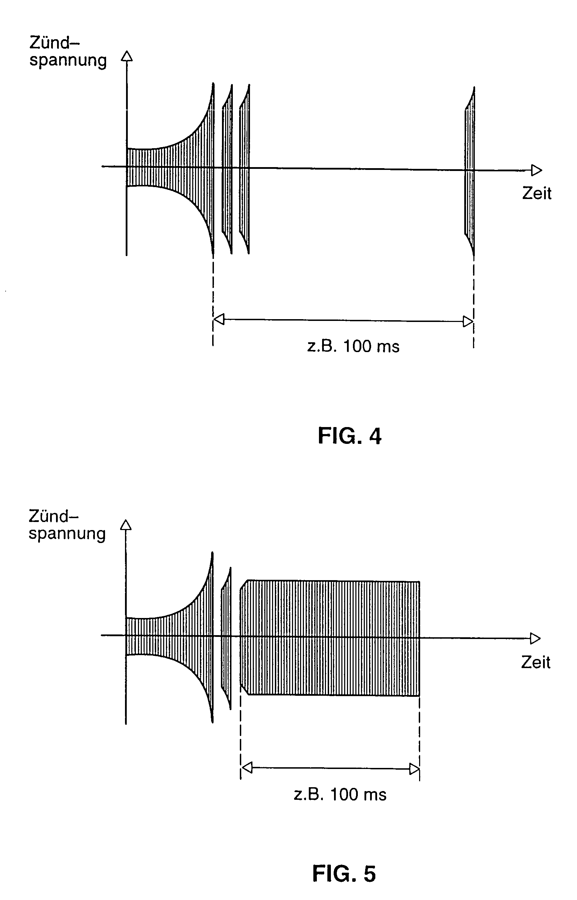

Figur 4 zeigt ein schematisiertes Beispiel eines typischen Verlaufs der Zündspannung über der Zeitachse mit beispielhaft etwa 100 aufeinanderfolgenden Zündpulsen. In Figur 4 ist allerdings die Situation dargestellt, dass es nach etwa 100 ms nicht zu einer Zündung gekommen ist. Hier hat also das Flussdiagramm aus Figur 2 letztlich zu dem Ergebnis geführt, dass in der im oberen Drittel der Figur 2 angeordneten Abfrage der Höhe der Variablen t der Wert 101 gesehen wurde, so dass die Steuerschaltung 12 abgeschaltet hat.

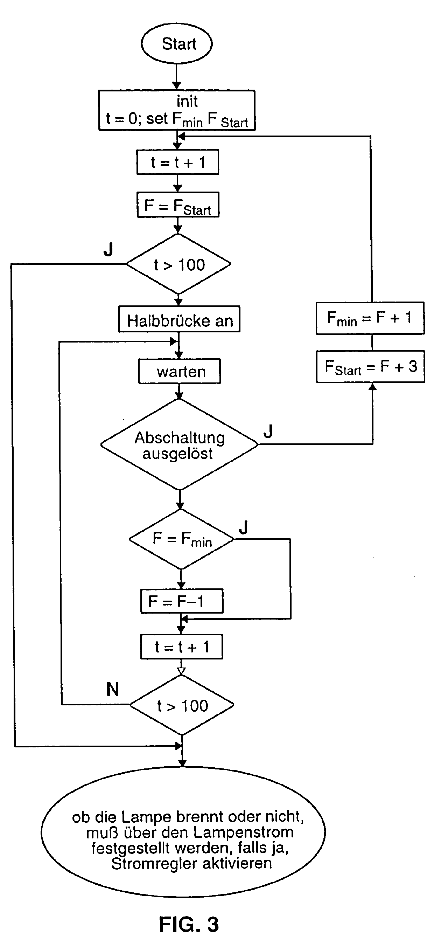

Das zweite Ausführungsbeispiel ist in Figur 3 und in Figur 5 näher dargestellt. Der Unterschied zwischen den Figuren 2 und 3 besteht zunächst darin, dass bei einer Bejahung der Abfrage eines Vorliegens einer Sicherheitsabschaltung etwa in der Mitte der Figuren 2 und 3 nicht nur F_{Start} gegenüber der Abschaltfrequenz um drei Schritte höher festgesetzt wird, sondern auch Fₘᵢₙ auf einen Schritt über der Abschaltfrequenz festgesetzt wird. Wenn also wegen der um drei Schrittweiten gegenüber der Abschaltfrequenz erhöhten Schaltfrequenz kein neuer Abschaltvorgang entsteht, so führt die Nein-Antwort auf die Abfragung der Abschaltung zu einem Vergleich der tatsächlichen Frequenz F mit einem Wert von Fₘᵢₙ, der über der vorherigen Abschaltfrequenz liegt. Sollte es bei dem erneuten Durchlauf der oberen Schleife allerdings zu einer weiteren Abschaltung kommen, so wird F_{Start} so lange um jeweils drei Schritte über die Abschaltfrequenz erhöht, bis dies nicht mehr geschieht.

Im unteren, an die Nein-Antwort der Abschaltungsabfrage anschließenden Teil des Flussdiagramms aus Figur 3 wird nun also mit Fₘᵢₙ verglichen und bei Nein-Antwort zunächst F um einen Schritt erniedrigt und t um einen Schritt erhöht. Solange der Maximalwert für die Laufvariable t noch nicht erreicht ist, führt dies zu der über der Abschaltungsabfrage liegenden Warteposition. Gelingt es also nun, bis zu Fₘᵢₙ zu gelangen, ohne dass bei Fₘᵢₙ eine Abschaltung erfolgt, so muss innerhalb der Zeit bis zu t = 100 eine Zündung erfolgen. Erfolgt keine Zündung, so kann dies über das Flussdiagramm aus Figur 3 nicht festgestellt werden. Die Steuerschaltung 12 muss also über die Messung des Lampenstroms feststellen, ob die Zündung erfolgt ist.

Sollte es vor oder bei Erreichen von Fₘᵢₙ doch zu einer Abschaltung kommen, werden wieder F_{Start} bzw. Fₘᵢₙ um drei Schritte bzw. einen Schritt über die Abschaltfrequenz erhöht, so dass das Procedere wie bereits beschrieben wiederholt wird. Wenn es zu häufig zu Abschaltungen kommt, führt dies dazu, dass in der oberen Schleife in Figur 3 der Wert t = 101 erreicht wird. Damit endet der Ablauf des Flussdiagramms ebenfalls.

Bei diesem Ausführungsbeispiel wird also die Situation angestrebt, dass ein Wert für Fₘᵢₙ ermittelt werden kann, der um einen Schritt über einer Frequenz, bei der eine Abschaltung erfolgt ist, liegt. Dabei soll jedoch bei Fₘᵢₙ gerade keine Abschaltung mehr erfolgt sein. Fₘᵢₙ ist also die minimal mögliche Dauerfrequenz im Zündmodus. Diese Dauerfrequenz wird dann so lange gehalten, bis t den Wert 101 erreicht hat. In Figur 5 äußert sich das so, dass nach einer endlichen Zahl von Versuchen ein kontinuierlicher Zündvorgang erfolgt, der ebenfalls in der Größenordnung von 100 ms liegen kann. Bei den dargestellten Beispielen liegt der Schwellenwert der Sicherheitsabschalteinrichtung in der Steuerschaltung 12 übrigens bei dem 1,6 fachen des nominellen Sättigungsstromes der Lampendrossel 10 bei Raumtemperatur.

## Patentansprüche

1. Betriebsschaltung für eine Entladungslampe (1), die einen Wechselspannungsgenerator (6, 7) aufweist, der zum Zünden und Betreiben der Entladungslampe (1) eine Wechselstromversorgungsleistung mit verschiedenen Frequenzen (F) erzeugen kann,
wobei die Betriebsschaltung dazu ausgelegt ist, die Entladungslampe (1) bei einer Frequenz zu zünden, bei welcher eine Resonanzüberhöhung eines mit der Entladungslampe (1) verschalteten Schwingkreises (9 - 11) auftritt
und eine Sicherheitsabschalteinrichtung (12) aufweist, die bei einem Schwellenwert im Bereich unzulässig hoher Versorgungsströme des Wechselspannungsgenerators (6, 7) die Versorgungsleistung abschaltet,
**dadurch gekennzeichnet, daß** die Betriebsschaltung dazu ausgelegt ist, bei Betriebsbeginn zum Zünden der Entladungslampe (1) die Frequenz (F) der Versorgungsleistung allmählich zu erniedrigen, und wenn die Versorgungsleistung durch die Sicherheitsabschaltungeinrichtung (12) abgeschaltet werden sollte, die Frequenz (F) gegenüber der Abschaltfrequenz, bei der abgeschaltet wurde, zu erhöhen, um einen neuen Zündversuch zu beginnen.

2. Betriebsschaltung nach Anspruch 1, die dazu ausgelegt ist, dass nach einer Abschaltung bei einem neuen Zündversuch die Frequenz (F) von einer gegenüber der Abschaltfrequenz erhöhten Frequenz (Fₛₜₐᵣₜ) ausgehend wieder allmählich erniedrigt wird.

3. Betriebsschaltung nach Anspruch 2, die dazu ausgelegt ist, dass bei dem neuen Zündversuch die Frequenz (F) von der erhöhten Frequenz (Fₛₜₐᵣₜ) ausgehend bis zu einer gegenüber der Abschaltfrequenz geringfügig erhöhten Frequenz (Fₘᵢₙ) erniedrigt wird, sofern die Sicherheitsabschalteinrichtung (12) dabei nicht abschaltet, und, falls die Sicherheitsabschalteinrichtung (12) dabei abschaltet, die Frequenz (F) zu einem wiederum neuen Zündversuch wieder von einer gegenüber der letzten Abschaltfrequenz erhöhten Frequenz (Fₛₜₐᵣₜ) ausgehend allmählich bis zu einer gegenüber der letzten Abschaltfrequenz geringfügig erhöhten Frequenz (Fₘᵢₙ) erniedrigt wird, sofern die Sicherheitsabschalteinrichtung (12) dabei nicht abschaltet, und, wenn die Sicherheitsabschalteinrichtung (12) auch dabei abschaltet, in der beschriebenen Weise fortgefahren wird.

4. Betriebsschaltung nach Anspruch 2, die dazu ausgelegt ist, dass bei dem neuen Zündversuch das allmähliche Absenken der Frequenz (F) bis zu einer vorgegebenen Minimalfrequenz (Fₘᵢₙ) erfolgt, sofern die Sicherheitsabschalteinrichtung (12) dabei nicht abschaltet, und, wenn die Sicherheitsabschalteinrichtung (12) dabei abschaltet, die Frequenz (F) zu einem wiederum neuen Zündversuch von einer gegenüber der Abschaltfrequenz erhöhten Frequenz (Fₛₜₐᵣₜ) ausgehend allmählich erniedrigt wird bis zu der vorgegebenen Minimalfrequenz (Fₘᵢₙ), sofern die Sicherheitsabschalteinrichtung (12) dabei nicht abschaltet, und, wenn die Sicherheitsabschalteinrichtung (12) dabei abschaltet, der beschriebene Vorgang wiederholt wird.

5. Betriebsschaltung nach Anspruch 3 oder Anspruch 4, die dazu ausgelegt ist, dass während wiederholter Zündversuche eine Laufvariable (t) hochgezählt wird und bei Erreichen eines vorgegebenen Maximalwerts der Laufvariable (t) die Zündversuche eingestellt werden.

6. Betriebsschaltung nach einem der vorstehenden Ansprüche, bei der der Wechselspannungsgenerator ein Halbbrückenoszillator mit Schalttransistoren (6, 7) ist, deren Schaltbetrieb durch eine die Frequenzen (F) erzeugende digitale Steuerschaltung (12) getaktet werden.

7. Betriebsschaltung nach einem der vorstehenden Ansprüche, bei der die Entladungslampe (1) in Reihe mit einer Lampendrossel (10) geschaltet ist, wobei die Sicherheitsabschalteinrichtung (12) den Lampendrosselstrom (13) überwacht.

8. Betriebsschaltung nach Anspruch 7, bei der der Schwellenwert der Sicherheitsabschalteinrichtung (12) zwischen dem 1,3-fachen und dem 2,5-fachen des Sättigungsstroms der Lampendrossel (10) bei Raumtemperatur liegt.

9. Betriebsschaltung nach einem der vorstehenden Ansprüche, die dazu ausgelegt ist, dass die Frequenz (F) nach erfolgreichem Zünden zum Regeln auf einen vorgegebenen Versorgungsstrom verwendet wird.

10. Betriebsschaltung nach einem der vorstehenden Ansprüche, die dazu ausgelegt ist, dass die allmähliche Frequenzerniedrigung schrittweise in Schrittweiten zwischen 0,2 % und 1 % der Schwingkreisresonanzfrequenz erfolgt.
